# EUROPÄISCHE PATENTSCHRIFT

(11) **EP 0 616 830 B1**
(45) Veröffentlichungstag und Bekanntmachung des Hinweises auf die Patenterteilung: **27.12.1996**
(21) Anmeldenummer: 94104528.8
(22) Anmeldetag: 22.03.1994
(51) Int. Cl.: B01D 37/02

(54) **Anschwemmkopf**
Device for filter precoating
Dispositif pour former une couche de filtrage

(30) Priorität: 23.03.1993 DE 9304391 U
(43) Veröffentlichungstag der Anmeldung: 28.09.1994
(73) Patentinhaber: HANDTMANN, Thomas, D-88400 Biberach (DE)
(72) Erfinder: HANDTMANN, Thomas, D-88400 Biberach (DE)
(74) Vertreter: Grünecker, Kinkeldey, Stockmair & Schwanhäusser Anwaltssozietät

(56) Entgegenhaltungen:
- WO-A-93/00146
- DE-A- 2 221 658
- US-A- 2 445 287

## Beschreibung

Die Erfindung betrifft einen Anschwemmkopf zum Aufbau eines Filterkuchens in einem Filterträger, mit einem Einlaßstutzen für das Filterhilfsmittel und mit einem unter der Mündung des Einlaßstutzens eingeordneten Umlenkelement zum Umlenken des Filterhilfsmittelstromes.

Aus der WO 93/001 46 ist ein Filterverfahren und eine Filtervorrichtung zum Filtern von Flüssigkeiten bekannt, bei dem zunächst in einer Anschwemmstation in einem Filterträger der Filterkuchen erzeugt wird. Der Träger wird dann von der Anschwemmstation mit dem dort ausgebildeten Filterkuchen in einen Filter verbracht, indem mehrere Filterträger turmartig übereinander angeordnet und miteinander verpreßt werden. Ein derartiger Filterturm kann dann z. B. zum Filtern von Flüssigkeiten, wie Bier oder dergleichen, eingesetzt werden.

Um in der Anschwemmstation eine gleichmäßige Anschwemmung des Filterkuchens zu erreichen, das heißt einen gleichmäßigen Aufbau des Filterkuchens mit im wesentlichen einheitlicher Höhe, wird das Filterhilfsmittel, z. B. Kieselgur, in einem Wasserstrom über einen Einlaßstutzen an einem Anschwemmkopf der Anschwemmstation eingeleitet und nach dem Durchtritt durch den Einlaßstutzen mit einem Umlenkelement so umgelenkt, daß er sich im Innenraum des Anschwemmkopfes oberhalb des Filterträgers, in dem der Filterkuchen erzeugt werden soll, verteilt.

Dabei hat es sich nun jedoch gezeigt, daß die Verteilung mit einem Umlenkelement nicht immer eine gleichmäßige Filterkuchenausbildung sicherstellen kann, insbesondere wegen sich bildender Verwirbelungen, die im Filterkuchen kleine Krater entstehen lassen, die nicht gewünscht sind.

Aufgabe der Erfindung ist es daher, einen Anschwemmkopf der eingangs genannten Art so weiterzubilden, daß sich ein gleichmäßiger Filterkuchenaufbau erreichen läßt.

Gelöst wird diese Aufgabe bei einem Anschwemmkopf der genannten Art dadurch, daß beabstandet zu dem Umlenkelement ein Verteilergitter angeordnet ist.

Es hat sich herausgestellt, daß ein zwischen Filterkuchen und Einlaßstutzen angeordnetes Verteilergitter eine Unterbrechung der Strömungswirbel bewirkt und eine sehr gleichmäßige Verteilung der das Filterhilfsmittel enthaltenen Flüssigkeit und damit einen gleichmäßigen Aufbau des Filterkuchens sicherstellt.

Die Maschenweite des Verteilergitters hängt von der Zusammensetzung des Filterhilfsmittels ab, beträgt jedoch bei Verwendung von üblichen Kieselgurrezepturen zwischen 3 und 12mm bei einer Drahtstärke zwischen 0,5 und 2mm. Die Maschenweite wird dabei immer so gewählt, daß ein Festsetzen der Filterhilfsmittelteile an dem Gitter verhindert wird.

Damit das Verteilergitter leicht reinigbar und durch Gitter anderer Maschenweite je nach Einsatzzweck austauschbar ist, wird das Verteilergitter bevorzugt lösbar an den Seitenwandungen des Anschwemmkopfes befestigt.

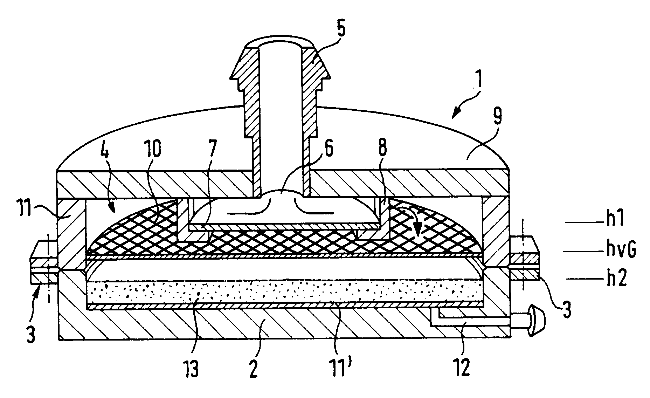

Im folgenden wird die Erfindung anhand des in der Zeichnung dargestellten Ausführungsbeispieles weiter erläutert und beschrieben.

Dabei zeigt die einzige Figur in einer perspektivischen, vereinfachten Schnittdarstellung den Aufbau eines erfindungsgemäßen Anschwemmkopfes.

Die Zeichnung läßt einen insgesamt mit 1 bezeichneten Anschwemmkopf erkennen, der auf einen Filterträger 2 aufgesetzt ist. Der Filterträger 2 ist mit dem Anschwemmkopf 1 in geeigneter Weise über Halterungen 3 so verbunden, daß der Anschwemmkopf mit dem Filterträger 2 einen geschlossenen Innenraum 4 bildet. Der Anschwemmkopf und der Träger sind kreisförmig ausgebildet. Zentral in der Mitte des Anschwemmkopfes 1 befindet sich der Einlaßstutzen 5, über den das in einem Fluid, z. B. Wasser enthaltende Filterhilfsmittel in den Innenraum 4 einströmen kann. Unterhalb der Mündung 6 des Einlaßstutzens 5 befindet sich beabstandet ein kreisförmiges Umlenkelement 7, das über geeignete Halterungen 8 am Deckel 9 des Anschwemmkopfes gehalten ist. Das einströmende Filterhilfsmittel wird entsprechend den eingezeichneten Pfeilen hier umgelenkt und verteilt sich im wesentlichen über den Rand des Umlenkelementes und fließt von dort nach unten auf das Verteilergitter 10. Das Verteilergitter ist geeignet an der Innenwandung 11 des Anschwemmkopfes lösbar befestigt. Die Maschenweite des Verteilergitters hängt von der Zusammensetzung des Filterhilfsmittel ab, beträgt jedoch im allgemeinen für Kieselgur zwischen 3 und 12 mm. Die Drahtstärke beträgt zwischen 0,5 und 2 mm. Die Flüssigkeit mit dem Filterhilfsmittel durchdringt das Verteilergitter 10. Von einem feinen Maschengewebe 11' am Boden des Filterträgers 2 wird nun das Filterhilfsmittel auf dem Maschengewebe zurückgehalten, während die Flüssigkeit durch das Maschengewebe 11' hindurchströmen kann und dann über einen oder mehrere Auslässe 12 in bekannter Weise den Filterträger verläßt. Auf dem Maschengewebe 11 bildet sich dann der Filterkuchen 13 aus.

Das auf halber Höhe hvG zwischen der Höhe h1 des Umlenkelementes 7 und der Maximalhöhe h2 des Filterkuchens angeordnete Verteilergitter unterbricht die Strömung vom Umlenkelement in den Filterträgerraum und sorgt für eine sehr gleichmäßige Verteilung des Filterhilfsmittels, so daß sich insgesamt ein sehr gleichmäßiger Filterkuchen ohne Kraterbildung aufbauen läßt.

## Patentansprüche

1. Anschwemmkopf zum Aufbau eines Filterkuchens in einem Filterträger (2), mit einem Einlaßstutzen (5) für das Filterhilfsmittel und mit einem unter der Mündung des Einlaßstützens angeordneten Umlenkelement (7) zum Umlenken des Filterhilfsmittelstromes,
dadurch **gekennzeichnet**, daß
beabstandet zum Umlenkelement (7) zwischen dem Umlenkelement und dem Filterträger ein Verteilergitter (10) angeordnet ist.

2. Anschwemmkopf nach Anspruch 1, dadurch gekennzeichnet, daß die Maschenweite des Verteilergitters (10) bei Verwendung von Kieselgur als Filterhilfsmittel zwischen 3 und 12 mm, und die Drahtstärke zwischen 0,5 und 2 mm beträgt.

3. Anschwemmkopf nach Anspruch 1 oder 2, dadurch gekennzeichnet, daß das Verteilergitter (10) lösbar an den Seitenwandungen (11) des Anschwemmkopfes (1) angeordnet ist.

## Claims

1. Precoating head for building up a filter cake in a filter carrier (2), with an inlet fitting (5) for the filter aid and with a deflector element (7) arranged below the mouth of the inlet fitting for deflecting the stream of filter aid, characterised in that at a distance from the deflector element (7) between the deflector element and the filter carrier is arranged a distributor grid (10).

2. Precoating head according to claim 1, characterised in that the mesh size of the distributor grid (10) when diatomaceous earth is used as the filter aid is between 3 and 12 mm, and the wire thickness is between 0.5 and 2 mm.

3. Precoating head according to claim 1 or 2, characterised in that the distributor grid (10) is arranged releasably on the side walls (11) of the precoating head (1).

## Revendications

1. Tête de filtration à couche pour la constitution d'un gâteau de filtre dans un support filtrant (2), avec une tubulure d'admission (5) pour l'adjuvant de filtration, et avec un élément déflecteur (7), disposé sous le débouché de la tubulure d'admission pour dévier le courant de l'adjuvant de filration, caractérisée en ce qu'une grille répartitrice (10) est disposée à distance de l'élément déflecteur (7), entre ce dernier et le support filtrant.

2. Tête de filtration à couche suivant la revendication 1, caractérisée en ce que l'ouverture de maille de la grille répartitrice (10), en cas d'utilisation de diatomite comme adjuvant de filtration, est comprise entre 3 et 12 mm, l'épaisseur de fil étant de 0,5 à 2 mm.

3. Tête de filtration à couche suivant l'une des revendications 1 et 2, caractérisée en ce que la grille répartitrice (10) est montée d'une manière amovible sur les parois latérales (11) de la tête de filtration (1).
